(19) **Europäisches Patentamt**
**European Patent Office**
**Office européen des brevets**

(11) **EP 3 034 634 A1**

(12) **EUROPEAN PATENT APPLICATION**

(43) Date of publication:
**22.06.2016 Bulletin 2016/25**

(51) Int Cl.:
*C22B 1/04* (2006.01)     *C22B 7/00* (2006.01)
*C22B 19/30* (2006.01)

(21) Application number: **14460121.8**

(22) Date of filing: **18.12.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicants:
• **Rudnicki, Dariusz**
  **96-321 Zelechów (PL)**
• **Hyk, Wojciech**
  **00-842 Warszawa (PL)**

(72) Inventors:
• **Hyk, Wojciech**
  **00-842 Warszawa (PL)**
• **Rudnicki, Dariusz**
  **96-321 Zelechow (PL)**
• **Kitka, Konrad**
  **22-470 Zwierzyniec (PL)**

(74) Representative: **Jedrzejewski, Michal**
  **Jarzynka i Wspólnicy**
  **Kancelaria Prawno-Patentowa Sp. j.**
  **ul. Slominskiego 19/522**
  **00-195 Warszawa (PL)**

(54) **Method of thickening iron and recovery of zinc from waste materials from processing zinc and lead ores**

(57)     Method of thickening iron with simultaneous recovery of zinc from sulphur-bearing waste materials from processing zinc and lead ores.

EP 3 034 634 A1

**EP 3 034 634 A1**

**Description**

The object of the invention is a method of thickening iron with simultaneous recovery of zinc from the waste materials from processing zinc and lead ores (hereinafter referred to as zinciferous materials).

Zinciferous materials include the following basic components (most often as complex compositions of oxides, sulphides, carbonates and silicates), whose approximate percentages by weight are within the following ranges: iron 15 to 28%, zinc 3% to 12%, calcium compounds up to 16%, silica up to 12%, sulphur up to 9%, lead 0.5% to 6%, copper and arsenic up to 2%, as well as trace amounts of noble metals (silver, platinum) up to ca. 0.0001%. The zinc present in the material is mostly chemically bonded with iron and forms a series of compounds referred to as zinc ferrite. These compounds give the materials, in which they are present, magnetic properties, but their complex chemical form prevents simple separation of iron compounds from zinc compounds via an external magnetic field.

The essential idea of the developed method is based on selective leaching of zinc to form an aqueous solution of zinc salt, leaving out other major metallic constituents present in the material, i.e. iron and lead. The gaseous sulphur dioxide ($SO_2$) dissolved in a suitable amount of water is a factor that enables selective conversion of zinc compounds to water soluble forms. The presence of bonded sulphur in the form of metal sulphides in waste materials allows for easy and cost-effective generation of this gas by roasting. Therefore, the process of selective recovery of zinc does not require any additional raw materials - the energy for heating and the water which provides an environment for dissolution of zinc compounds shall suffice. The process of leaching zinc from zinciferous material is carried out at a temperature of 20-25°C. Subjecting the zinciferous material to repetitive leaching process results in a significant (more than 40%) reduction of the content of this metal in the raw material with simultaneous generation of a fraction of material with substantially higher content of iron oxides. The selection of the adequate pH of the aqueous medium in which the leaching process is carried out is the key factor determining the quantitative and selective separation of zinc.

An important requirement of the developed method is the presence of at least 6% sulphur by weight in the processed material. If the amount of sulphur is insufficient, it may be supplemented by adding sulphuric acid (VI) to adjust the pH in a water bath (hereinafter referred to as the leaching bath). An alternative approach involves using a leaching bath that consists of sulphuric acid (VI) solution at a concentration of 0.1%-0.5%.

The first step in the method is the roasting of the sieved or fragmented (to a maximum grain diameter of 4 mm) zinciferous material with the addition of carbon (10% of the roasted material by weight) or without it, at a temperature of at least 750°C in a rotary kiln with air access. This process results in decomposition of sulfide forms of metals and generation of gaseous $SO_2$, as well as thermal decomposition of the complex compounds of iron and zinc (decomposition of zinc ferrite $ZnFe_2O_4$). The thermal decomposition of zinc ferrite can be represented by the following general chemical equation:

$$(1) \qquad ZnFe_2O_4 = ZnO + Fe_2O_3$$

The addition of carbon increases the efficiency of thermal decomposition of zinc ferrite according to the following chemical equation:

$$(2) \qquad 3ZnFe_2O_4 + C = 3ZnO + 2Fe_3O_4 + CO$$

The material charged into the kiln is heated, whereby in the first stage, the free water and the crystallisation water contained in the material evaporates. In a further stage, at a temperature of approximately 450°C, thermal dissociation of carbonates and decomposition of sulfides occurs, and at a temperature of 750°C thermal decomposition of zinc ferrite takes place (equations (1) - (2)).

The roasting process has two important outcomes in terms of the concept of the proposed method of zinc recovery. First, by converting the metal sulphides, gaseous sulphur dioxide is generated directly from the same material from which zinc is obtained in the subsequent steps. Second, metals present in the form of sulfides, as well complex chemical series, decompose to a great extent and are converted into oxides. The roasting process of the treated material with high sulphur content shall be carried out long enough with air access, so that virtually all sulphur contained in the material is converted to its gaseous oxide ($SO_2$). The higher the amount of $SO_2$ generated from the material, the more zinc can be leached by it from the roasted material. The optimal time of residence of the raw material in the kiln chamber is 1 hour. The gaseous $SO_2$ separated in the initial stage of roasting is absorbed in water to obtain a pH of 2. The temperature of the water used for this purpose should not exceed 25°C so as not to limit the solubility of $SO_2$ via elevated temperature.

The second stage of the proposed method consists of a process of leaching zinc from the roasted material. This involves directing the prepared aqueous solution of $SO_2$ onto the previously roasted material devoid of sulphur to the highest possible extent. Thus prepared suspension (in a ratio: 2 parts of an aqueous solution of $SO_2$ by volume to 1 part of the roasted material) is then vigorously stirred for approximately 1 hour to maximise the contact area of the particles of the material and the solution of $SO_2$. In the presence of zinc oxide (ZnO) and iron oxides, sulphur dioxide reacts with water and forms metal bisulfates (IV) as described by the following chemical reactions:

$$(3) \qquad ZnO + H_2O + 2SO_2 = Zn(HSO_3)_2$$

$$(4) \qquad Fe_2O_3 + 3H_2O + 6SO_2 = 2Fe(HSO_3)_3$$

The formation of iron (III) bisulfate (IV) represented by equation (4) is a competitive reaction that occurs when the aqueous suspension of a material is being directly saturated with gaseous $SO_2$. The efficiency of this reaction intensifies also when the pH of the suspension reaches values below 2. The leaching of iron can be reduced by using a previously prepared aqueous solution of sulphur dioxide with a pH not lower than 2 for leaching the roasted material. This enables the conversion of mainly zinc oxide in the form of a soluble bisulfate (IV) (Zn $(HSO_3)_2$) into a solution. If the leaching is carried out with diluted sulphuric acid (VI), zinc oxide is dissolved into a highly water-soluble zinc sulfate (VI) ($ZnSO_4$). It is worth noting that in either case the selective dissolution of ZnO is carried out in a chemically non-aggressive environment. Repetitive rinsing with an aqueous solution of $SO_2$ with a pH not lower than 2 or with a solution of sulphuric acid (VI) at a concentration of 0.1%-0.5% enables complete, almost quantitative leaching of zinc oxide. It involves subjecting the prepared portion of desulphurised material containing mainly metal oxides to $SO_2$ in an aqueous suspension with vigorous stirring, filtering - to remove the dissolved zinc bisulfate (IV) from the reaction environment, and another addition of a new portion of aqueous solution of $SO_2$ to the initially leached material partially deprived of zinc. The resulting filtrate is also free of lead compounds. The oxide forms of lead present in the roasted material are not leached by the formed sulphuric acid (IV) due to the practically nil solubility of lead (II) bisulfate (IV) ($Pb(HSO_3)_2$) or lead (II) sulfate (VI) ($PbSO_4$) in water.

The zinc present in the acidified solution in the form of cations can be separated from the solution in two ways. The first method consists of subjecting the solution to an electrolysis process with the potential and current density adequate for zinc cations (i.e. according to the method presented in Polish Patent No. 54773 of 20 March 1968). The zinc separated in this way has a very high purity. The second method of zinc separation involves the precipitation reaction with the use of a saturated solution of sodium carbonate ($Na_2CO_3$) followed by the reduction of the zinc oxide obtained by roasting in shaft furnaces of special design. Adding portions of a saturated solution of $Na_2CO_3$ to an aqueous solution of $Zn(HSO_3)_2$ or $ZnSO_4$ results in the neutralisation of the acidic reaction environment, and in a subsequent precipitation of white-gray flocky precipitate of basic zinc carbonate ($[ZnCO_3]_2[Zn(OH)_2]_3$) from the solution. The percentage of zinc in this compound is 59.5%. This value may be a useful criterion of the level of the impurities in the precipitate obtained in industrial conditions. The emergence of basic zinc carbonate precipitate signals that the solution of $Na_2CO_3$ should be no longer added. This precipitate settles on the bottom of the reaction vessel at a moderate rate, whereas for small concentrations of zinc cations in the solution it may assume the form of a colloid. If this is the case, it is recommended to continue the process of leaching zinc from the material until its maximum possible amounts for concentrated solutions are obtained in the filtrate. The level of contamination by other compounds in the obtained precipitate does not exceed 15% by weight, with the content of iron being lower than 1% by weight. It is worth mentioning that reducing the pH of the leaching solution below the recommended value of 2 before the precipitation reaction effectively lowers the selectivity of the zinc leaching process. The obtained precipitate, besides the basic zinc carbonate, may contain up to 10% iron hydroxide and carbonate by weight and consequently also an increased content of other metals due to their adsorption onto the particles of the iron hydroxide (III). Lowering the pH or directly saturating with $SO_2$ the suspension of the roasted material also leads to the intensification of the leaching of calcium from its compounds present in the zinciferous material and results in an increased content of calcium carbonate ($CaCO_3$) in the obtained precipitate of zinc salt. From the perspective of the subsequent stages of pyrometallurgical method of obtaining metallic zinc, the presence of calcium carbonate is advantageous, as its thermal decomposition in the presence of carbon improves the reducing abilities of the atmosphere in zinc smelting.

Adding the stage of zinc precipitation via a solution of sodium carbonate to the entire sequence of physical and chemical steps that constitute the process of zinc leaching and recovery revealed an important effect. This stage enables the formation of the basic zinc carbonate precipitate containing an increased amount of platinum. The latter, initially present in trace amounts in the material subjected to roasting, is subsequently leached together with the zinc with the use of gaseous sulphur dioxide. The likely mechanism of leaching of platinum from the roasted material involves the formation of the acid form of platinum (II) sulfate (IV) ($H_3Pt(SO_3)_2OH$) as a result of the complex formation of its oxide or chloride forms by sulfite anions created in aqueous solution neutralised by adding sodium carbonate. A remark on the formation of a platinum compound of this type can be found in a patent description (United States Patent, Petrow et al. Platinum Colloid Sol and Method of Forming Same, Appl. No.: 683 757).

So as to further reduce the amount of waste materials, the final stage of the proposed procedure involves converting the solid residue after acid leaching of zinc into a suspension and subjecting it to an external magnetic field in wet magnetic separators. The process of wet magnetic separation allows to thicken the iron oxides to a level of 55% by weight.

A key limitation of the proposed procedure (comprising the stages of roasting, acid leaching and magnetic separation) is that the processed materials, in addition to the aforementioned metals, i.e. lead, zinc, iron and impurities such as copper, arsenic, silica, contain also calcium compounds such as oxides and carbonates. An increased content of calcium compounds in the processed material reduces the efficiency of the zinc leaching process. The is due to the occurrence, in an aqueous suspension of the roasted oxide material, of a competitive reaction of formation of calcium bisulfate (IV) according to the following formula:

$$(5) \qquad CaO+H_2O+2SO_2 = Ca(HSO_3)_2$$

With a high content of calcium (or magnesium) compounds in the processed material, the majority of the generated $SO_2$ is used to form calcium bisulfate (IV) which, at the CaO content of 6% and above, hinders the leaching of zinc from the material to such an extent that the entire process takes a long time and consumes great amounts of $SO_2$ and water. For coexisting oxides/carbonates of calcium, zinc, iron and lead, and in the case of applying $SO_2$ in an aqueous medium as a dissolving agent, the sequence of dissolution of the respective components of the mixture can be arranged in the following manner:

## calcium compounds > zinc compounds > iron compounds

If the content of CaO is above 6%, it is desirable, at a limited supply of $SO_2$, to neutralise the aqueous suspension of the roasted material with a 2% solution of sulphuric acid (VI). The aqueous suspension of the roasted material is characterised by a slightly basic pH (pH in the range of 7.5-8.0). The increase in the consumption of water and $SO_2$ and, most importantly, the complexity of the entire process is also a result of vastly reduced solubility of $Ca(HSO_3)_2$ in water. To form, and subsequently quantitatively leach this salt while simultaneously converting it to a solution in a quantitative manner from material rich in CaO, it is necessary to repeatedly rinse the material with a saturated solution of $SO_2$.

The method according to the invention has been presented below in embodiments.

Embodiment 1

The test was carried out on a 1 kg sample of waste material collected from a pile rich in zinc compounds, homogenised in a laboratory in terms of grain size (grain diameter - less than 1 mm) with the following chemical composition (Si and Ca converted respectively into $SiO_2$ and CaO):

Fe - 26.2%, Zn - 11.6%, Pb - 6.9%, S - 6.6%, $SiO_2$- 7.8%, CaO - 2.5%, As - 1,7%, Cu -1,6%, Pt < 0.0001%

The weight ratio of iron to zinc exceeds the anticipated value for zinc ferrite ($ZnFe_2O_4$), which indicates the presence of also other compounds of iron and possibly zinc.

The test sample of the material was roasted without adding carbon in a rotating steel cylinder with the supply of air necessary to convert sulphur contained in the material into sulphur dioxide $SO_2$. The generated sulphur dioxide was removed from the cylinder to a tank containing 6 $dm^3$ of tap water. The process of roasting was carried for 1 hour at a temperature of 750 $\pm$ 50°C. After the time of roasting lapsed, the material was transferred to the tank and cooled to ambient temperature. As a result of the roasting process, 0.810 kg of material was obtained.

The process of saturating water with gaseous $SO_2$ was carried out during roasting of the prepared sample of the material simultaneously with continuous determination of the pH of the solution. After the completion of the roasting process, the pH of the solution was at a level of 2.5. The $SO_2$ solution was divided into 3 portions of 2 $dm^3$ each, and the prepared in advance, roasted, desulphurised and cooled material rich in iron, zinc and lead oxides was rinsed with the successive portions of the prepared solution. The procedure was carried out as follows. A portion of 2 $dm^3$ of $SO_2$ solution was added to the roasted material. The resulting suspension was vigorously stirred in a reaction vessel for 40 minutes, and left alone to separate the solid phase from the solution. The phases separated relatively quickly, but the process was further accelerated by applying an external magnetic field generated by permanent neodymium magnets. The supernatant was collected in a separate vessel, and then filtered to separate micro-particles suspended in the solution. The above steps were repeated 2 more times, adding subsequent 2 $dm^3$ portions of the $SO_2$ to the material (solid residue) with the zinc already partially washed out, and separating the aqueous and solid phases from the obtained suspension after enough time from mixing the suspension has passed. All the filtered solutions free of even the colloidal forms of iron oxides were collected in a large vessel. Then small portions of the previously prepared saturated sodium carbonate solution were added to the clear and colourless filtrate, until a white precipitate of basic zinc carbonate appeared. The white flocky precipitate, after falling at the bottom of the vessel, was separated from the solution, rinsed with water to remove the remaining carbonates, and dried at a temperature of 80°C. The obtained gray-white precipitate was homogenised, and a 106 g portion was obtained. An X-ray Fluorescence (XRF) analysis revealed the following chemical composition of the precipitate:

Zn - 44.5%, CaO - 9.5%, As - 1,3%, Fe - 0.6%, S - 0.5%, Pb - 0.1%, Cu - 0.1%, Pt - 0.01 %

The applied procedure (3 rinses) made it possible to recover approximately 40% of the initial zinc content of the tested material and to thicken the platinum in the sediment of basic zinc carbonate to a factor of 100.

Embodiment 2

The test was carried out on a 100 kg sample of fragmented (maximum grain diameter - 4 mm) waste material freshly collected from a pile with very low amounts of sulphur and zinc compounds and with the following chemical composition:

Fe - 17.4%, CaO - 15.9%, $SiO_2$ - 10.1%, Zn - 4.0%, S - 1.5%, Pb - 1.2%, Cu - 0.5%, As - 0.3%

The weight ratio of iron to zinc substantially exceeds the anticipated value for zinc ferrite ($ZnFe_2O_4$), which indicates the presence of also other compounds of iron.

A weighed portion of the material was roasted with the addition of carbon (as coal dust in the amount of 10% of the roasted material by weight) in a rotary kiln (typically employed for quarter-industrial scale tests). Roasting was carried out at a temperature of 750 $\pm$ 10°C. The residence time of the subsequent batches of the material in the sintering chamber did not exceed one hour. After the entire batch was roasted, the material was transferred to a tank and cooled to ambient temperature. As a result of the roasting process 72 kg of material was obtained.

The roasted and cooled material was ground to obtain grains with a diameter not more than 1 mm, and a representative sample of 1 kg was collected. The sample was rinsed with successive portions of the prepared 0.2% solution of sulphuric acid (VI). The procedure was carried out as follows. A 2 dm$^3$ portion of acid solution was added to the sample of the roasted material. The resulting suspension was vigorously stirred in a reaction vessel for 40 minutes, and left alone to separate the solid phase from the solution. The phases separated relatively quickly, but the process was further accelerated by applying an external magnetic field generated by permanent neodymium magnets. The supernatant was collected in a separate vessel, and then filtered to separate micro-particles suspended in the solution. The above steps were repeated 2 more times, adding subsequent 2 dm$^3$ portions of the 0.2% solution of sulphuric acid (VI) to the material (solid residue) with the zinc already partially washed out, and separating the aqueous and solid phases from the obtained suspension after enough time from mixing the suspension has passed. All the filtered solutions free of even the colloidal forms of iron oxides were collected in a large vessel. Then small portions of the previously prepared saturated sodium carbonate solution were added to the clear and colourless filtrate, until a white precipitate of basic zinc carbonate appeared. The white flocky precipitate, after falling at the bottom of the vessel, was separated from the solution, rinsed with water to remove the remaining carbonates, and dried at a temperature of 80°C. The resulting gray-white precipitate was homogenised to obtain a 45 g portion (from 1 kg of roasted material). An X-ray Fluorescence (XRF) analysis revealed the following chemical composition of the obtained precipitate:

Zn - 41.7%, $SiO_2$ - 2.1%, CaO - 1.1%, Fe - 1.1%, Cu - 0.9%, As - 0.8%, S - 0.8%

The applied procedure (3 rinses) made it possible to recover approximately 40% of the initial zinc content in the tested material.

The solid residue after acid leaching of zinc was rinsed with water 5 times with simultaneous filtration using an external magnetic field generated by a permanent neodymium magnet. The goal was to obtain material whose chemical properties (i.e. chemical composition in terms of quality and quantity) are as close as possible to the requirements for a blast furnace charge. The process of wet magnetic separation according to the above described procedure allowed to obtain a fraction of the material (whose weight was equal to at least 1/3 of the initial weight of the sample subjected to leaching) with the following chemical composition (obtained via the titrimetric method and ICP-OES technique):

Fe - 37.5%, $SiO_2$ -12.1%, CaO - 9.5%, Zn - 1.5%, Pb - 1.0%

These parameters allow the obtained material to be classified as a good substitute for iron ore.

**Claims**

1. A method of thickening iron with simultaneous recovery of zinc from the waste materials from processing zinc and lead ores with the sulphur content in the processed material of at least 6% by weight, is **characterised in that**

   1) the sieved or fragmented zinciferous material with a grain size of up to 4 mm, with the addition of carbon in the amount of 10% of roasted material by weight or without this addition is roasted at a temperature of at least 750°C in a rotary kiln with air access, which results in decomposition of sulfide forms of metals and generation of gaseous $SO_2$, as well as thermal decomposition of the complex compounds of iron and zinc, as represented by the following chemical equations:

   $$(1) \qquad Zn\,Fe_2O_4 = ZnO + Fe_2O_3$$

   $$(2) \qquad 3ZnFe_2O_4 + C = 3ZnO + 2Fe_3O_4 + CO;$$

   2) then leaching of zinc from the roasted material is carried out by directing the prepared aqueous solution of $SO_2$ onto the previously roasted material devoid of sulphur to the highest possible extent, thus prepared suspension (in a ratio: 2 parts of an aqueous solution of $SO_2$ by volume to 1 part of the roasted material) is then vigorously stirred for approximately 1 hour to maximise the contact area of the particles of the material and the $SO_2$ solution so that, in the presence of zinc oxide and iron oxides, sulphur dioxide reacts with water and selectively forms zinc bisulfate (IV) ;
   3) then the solid residue after acid leaching of zinc is converted to a suspension and subjected to an external magnetic field in wet magnetic separators to further reduce the amount of waste materials so that the iron oxides are thickened to a level of 55% by weight.

2. A method according to claim 1 **characterised in that** the zinciferous material is roasted for 1 hour.

3. A method of thickening iron with simultaneous recovery of zinc from the waste materials from processing zinc and lead ores with low sulphur content in the processed material (below 4% by weight) **is characterised in that**

   1) the sieved or fragmented material zinciferous material with a grain size of up to 4 mm, with the addition of carbon in the amount of 10% of roasted material by weight or without this addition is roasted at a temperature of at least 750°C in a rotary kiln with air access, which basically results in the thermal decomposition of the complex compounds of iron and zinc, as represented by the following chemical equations:

   $$(1) \qquad ZnFe_2O_4 = ZnO + Fe_3O_4$$

   $$(2) \qquad 3ZnFe_2O_4 + C = 3ZnO + 2Fe_3O_4 + CO;$$

   2) then leaching of zinc from the roasted material is carried out using 0.1% sulphuric acid (VI) (but not more than 0.5%) by directing the solution onto the previously roasted material; thus prepared suspension (with a ratio of 2 parts of sulphuric acid (VI) solution by volume to 1 portion of the roasted material) is stirred vigorously for about one hour to maximise the contact area of the particles of the roasted material and the acid solution so that the zinc oxide selectively reacts with the sulphuric acid (VI) to form zinc sulphate (VI);
   3) then the solid residue after acid leaching of zinc is converted to a suspension and subjected to an external magnetic field in wet magnetic separators to further reduce the amount of waste materials so that the iron oxides are thickened to a level of 55% by weight.

4. A method according to claim 3 **characterised in that** the zinciferous material is roasted for 1 hour.

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 102 191 371 A (UNIV CENTRAL SOUTH) 21 September 2011 (2011-09-21) * the whole document * | 1,2 | INV. C22B1/04 C22B7/00 C22B19/30 |
| A | YAN HUAN ET AL: "A novel method to recover zinc and iron from zinc leaching residue", MINERALS ENGINEERING, vol. 55, 24 October 2013 (2013-10-24), pages 103-110, XP028781252, ISSN: 0892-6875, DOI: 10.1016/J.MINENG.2013.09.015 * the whole document * | 1,2 | |
| A | "ZINC LEACH RESIDUES A MINE ON THE DOORSTEP", METAL BULLETIN, METAL BULLETIN P.L.C., LONDON, GB, 1 April 1971 (1971-04-01), pages 6-10, XP009056015, ISSN: 0026-0533 * the whole document * | 1,2 | |

TECHNICAL FIELDS SEARCHED (IPC)

C22B

~~The present search report has been drawn up for all claims~~

| Place of search | Date of completion of the search | Examiner |
|---|---|---|
| Munich | 1 June 2015 | Juhart, Matjaz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 14 46 0121

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1, 2

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 14 46 0121

The Search Division considers that the present European patent application does not comply with the requirements of unity of invention and relates to several inventions or groups of inventions, namely:

    1. claims: 1, 2

        Recovery of Zn and thickening of iron from the waste comprising more than 6% S by leaching with aqueous solution of SO2.

        ---

    2. claims: 3, 4

        Claims 3 and 4: Recovery of Zn and thickening of iron from the waste comprising less than 4% S by roasting of a mixture of waste and carbon.

        ---

## ANNEX TO THE EUROPEAN SEARCH REPORT
## ON EUROPEAN PATENT APPLICATION NO.

EP 14 46 0121

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2015

| Patent document cited in search report | Publication date | Patent family member(s) | Publication date |
|---|---|---|---|
| CN 102191371 A | 21-09-2011 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- PL 54773
- US 683757 A